# EUROPEAN PATENT SPECIFICATION

(11) **EP 3 091 113 B1**
(45) Date of publication and mention of the grant of the patent: **11.03.2020**
(21) Application number: 14873906.3
(22) Date of filing: 12.06.2014
(51) Int. Cl.: D06F 39/02, D06F 39/00, D06F 39/14, D06F 23/04

(54) **WASHING MACHINE HAVING A CONTROL PANEL BASE WITH FUNCTION OF AUTOMATICALLY ADDING DETERGENT**
WASCHMASCHINE MIT EINER BEDIENFELDBASIS MIT FUNKTION ZUM AUTOMATISCHEN HINZUFÜGEN VON WASCHMITTEL
MACHINE À LAVER AVEC UNE BASE DE PANNEAU DE COMMAND À FONCTION D'AJOUT AUTOMATIQUE DE DÉTERGENT

(30) Priority: 27.12.2013 CN 201310737908
(43) Date of publication of application: 09.11.2016
(73) Proprietor: Haier Group Corporation, Qingdao, Shandong 266101 (CN); Qingdao Haier Washing Machine Co., Ltd., Qingdao, Shandong 266101 (CN)
(72) Inventor: LV, Peishi, Qingdao Shandong 266101 (CN); YANG, Lin, Qingdao Shandong 266101 (CN); CHENG, Baozhen, Qingdao Shandong 266101 (CN); WANG, Xiumei, Qingdao Shandong 266101 (CN); LIU, Zunan, Qingdao Shandong 266101 (CN)
(74) Representative: Zacco Sweden AB
(86) International application number: PCT/CN2014/079773
(87) International publication number: WO 2015/096407

(56) References cited:
- EP-A1- 2 133 456
- CN-A- 101 440 564
- CN-U- 201 538 905
- CN-U- 203 334 042
- CN-U- 203 741 604
- CN-U- 203 741 605
- CN-U- 203 741 606
- US-A1- 2012 111 067
- US-A1- 2012 125 055
- US-B1- 6 434 977

## Description

### Technical Field

The present disclosure relates to the field of washing machines, in particular to a fully automatic washing machine control panel base, and more in particular to a washing machine control panel base with function of automatically adding detergent.

### Background

A washing machine is a household appliance that uses mechanical energy to drive a water flow to wash fabrics such as clothing. According to rotation manners, washing machines are classified into fully automatic washing machines with rotary impellers and drum washing machines. The drum washing machine adopts a side-opening door, so that the door cannot be opened for adding during washing, and detergents such as liquid laundry detergents and softeners need to be added from outside and are washed into a drum by inlet water. For a typical fully automatic top-loading washing machine, a door cover is disposed at an upper position, and washing can be paused and the cover can be opened during washing, so that detergent dispensing requirements on previous products are not high.

A basic structure of a fully automatic washing machine is as follows. The fully automatic washing machine has a rectangular case; a rotatory washing inner tub for accommodating clothing is in the rectangular case ; an impeller is disposed at bottom in the washing inner tub; the impeller may be driven by a power system to rotate; the power system includes a motor and a clutch system; top of the case is a door cover that can be opened, and a control panel occupies portions outside the door cover; a control system is disposed at back of the control panel; the control system nowadays is always a control circuit with a single-chip microcomputer as a core; the control system controls a rotation direction, rotation frequency, and a rotation speed of the motor and all electrical feedbacks of the washing machine such as an audible and visible alarm for prompting.

In an existing fully automatic washing machine, a detergent box is disposed inside a control panel base or at back of the control panel base. However, this traditional design causes a lot of defects and inconvenience: when the detergent box is disposed inside the control panel base, that is, drawably disposed in the control panel base at a rear side of a clothing feeding port, a side portion of the control panel base corresponding to the clothing feeding port is provided with an opening, and the detergent box is disposed in the opening, which affects not only aesthetics but also support strength of the control panel base. For each time of clothing washing, the detergent box needs to be pulled out first, and then detergents are added, so that a user feels troublesome to use the washing machine. It is more inconvenient to add detergents such as softeners when the washing machine is already working. When the detergent box is disposed at back of the control panel base, the detergent box is relatively far away from the user, the user needs to stretch an arm to add detergents, so that it is inconvenient for use, and external aesthetics is affected. In addition, detergents are dispensed manually, and a relative large or small dispensing amount would affect clothing washing effect.

However, with improvements of automation levels, requirements on intelligence of home appliances, environmental protection, and heath are increasingly higher, which imposes requirements on intelligent and automatic dispensing of the fully automatic washing machine. U.S. Pat. No. 6,434,977 B1 of Kenyon A. Hapke Libertyville, IL et al., describes a laundry aid dispenser for a washing machine, which allows simple introduction of laundry aids into cups whose volumes are visible to the user and held within the console of the washing machine. A vertically oriented valve and flush chamber arrangement allows for the removal of the cups and the dispensing of viscous laundry aids such as fabric softener with reduced accumulation and buildup. The configuration also allows easy access to critical channels and parts of the dispenser as well as flexible electronic control of the dispensing times. Color-coding, keying and other indicia simplify the consumer's identification of the proper laundry aid for each cup. Moreover, U.S. Pat. No. 2012/125055A1 of Seok Jin LEE, Hwaseong-si, describes a washing machine including a machine body, an upper case coupled to the upper part of the machine body, a rotary tub rotatably disposed in the machine body, a detergent supply device coupled to the upper case to supply detergent supply into the rotary tub, and a water supply valve connected between an external water supply source and the detergent supply device, wherein the detergent supply device includes a detergent box having a first guide member in which the detergent is put and a second guide member to change a flow direction of wash water flowing along the first guide member and a water supply frame having a connection part connected to the water supply valve and a water supply part communicating with the connection part to supply water to the detergent box.

In view of this, the present disclosure is provided.

### Summary

The technical problem to be solved by the present disclosure is to solve defects in the related art by providing a washing machine control panel base with function of automatically adding various liquid detergents such as liquid laundry detergents and softeners accurately.

To solve the foregoing technical problem, a basic idea of the technical scheme adopted by the present disclosure includes a washing machine comprising a control panel base with function of automatically adding detergent according to claim 1.

Further, the automatic detergent dispensing apparatus further includes a washing water path for the measurement apparatus, where water is input through the washing water path into the measurement apparatus, and is then pumped by the negative pressure to a path, at which the Venturi tube is located, for discharging.

Further, the chamber is of a structure of a box with an opening at an upper portion; where the opening is corresponding to a detergent dispensing port; a partition plate is disposed in the box, and divides internal of the box into an upper-layer space and a lower-layer space; the partition plate is provided with a water leaking port that is in communication with the upper-layer space and the lower-layer space; the upper-layer space is provided with a water input and uniformization structure; and the lower-layer space is provided with a water spraying port.

Further, the chamber includes a box body and an annular buckle cover; where the box body and the annular buckle cover engages on a periphery of the opening to form a water channel; the water channel is provided with a water inlet; an inner side wall of the water channel is further provided with a plurality of water uniformization through holes in communication with the upper-layer space; a water guiding plate is disposed in the water channel; and the water uniformization through holes and the water guiding plate form the water input and uniformization structure.

Further, the water channel is formed by at least two water slots connected and having different directions; a water guiding plate is disposed in each of the water slots starting from a water slot in which the water inlet is located to a water slot before the last water slot; the water guiding plate extends along a water flow direction in the water slot, and divides the water slot into inner and outer water paths by coordinating with inner and outer side walls of the water slot; the inner water path discharges water through a corresponding water uniformization through hole; an end of the inner water path extends from the water guiding plate to a starting end of a next water slot, and is closed at the starting end; and the outer water path guides water into the next water slot.

The water slot is formed by engaging, in a sealed manner, outwardly protruding bosses and an annular buckle cover that are at periphery of the opening of the box body.

Further, a side wall of the box body is formed by four side plates including a front side plate, a rear side plate, a left side plate, and a right side plate; where outer walls of the left side plate, the right side plate, and the front side plate are respectively provided with a left boss, a right boss, and a front boss that protrude outwardly; a height of each boss is lower than that of a top end of a corresponding side plate; top ends of the left side plate, the right side plate, and the front side plate are evenly provided with a plurality of notches forming the water uniformization through holes; the bosses are provided with the water guiding plates; the annular buckle cover is formed by an inner peripheral frame, an outer peripheral frame, and an annular top cover, and has a section of an h-shaped structure; the inner peripheral frame is located in the opening of the box body; there is a water leaking gap between a front frame of the inner peripheral frame and the front side plate, between a left frame of the inner peripheral frame and the left side plate, and between a right frame of the inner peripheral frame and the right side plate; a front frame, a left frame, and a right frame of the outer peripheral frame are lap-connected to the front boss, the left boss, and the right boss respectively in a sealed manner, to coordinate to form a water channel; and a rear frame of the outer peripheral frame is connected to the rear side plate in a sealed manner.

Further, there are at least two containers; and at least one container is formed by at least two sub-containers that are in communication with each other, and the container is in communication with a detergent dispensing port through one of the sub-containers.

Further, the detergent dispensing port is provided with a door cover that can be opened and closed.

Further, a rear portion of the upper end surface of the control panel base is provided with three detergent dispensing ports; a front portion of the upper end surface is provided with an operation display panel; a first detergent dispensing port is in communication with the chamber for dispensing solid detergents; a second detergent dispensing port and a third detergent dispensing port are in communication with corresponding containers respectively; and the second detergent dispensing port and the third detergent dispensing port are each provided with a door cover that can be opened and closed.

Further, the second detergent dispensing port and the third detergent dispensing port are disposed on two sides of the first detergent dispensing port respectively; there are two containers; the two containers are in communication with the second detergent dispensing port and the third detergent dispensing port respectively; and the containers and the chamber are distributed in the accommodation space.

Preferably, one of the containers is formed by two sub-containers that are in communication with each other.

The control panel base according to the present disclosure is provided with a water inlet valve. The water inlet valve is in communication with the automatic detergent dispensing apparatus. The automatic detergent dispensing apparatus is in communication with the chamber through a water outlet pipeline. The chamber is provided with a water spraying port. The container is in communication with the automatic detergent dispensing apparatus through a liquid pumping pipeline. A liquid detergent pumped by the automatic detergent dispensing apparatus flows to the chamber through the water outlet pipeline, and is discharged by the water spraying port.

The annular buckle cover is provided with two water inlets. The control panel base is further provided with a hot water valve. The hot water valve is in communication with a first water inlet. A second water inlet is in communication with the automatic detergent dispensing apparatus.

By adopting foregoing technical schemes, compared with the related art, the present disclosure has following beneficial effects.

According to the washing machine control panel base of the present disclosure, the chamber for dispensing solid detergents, the container for containing liquid detergents, and the automatic detergent dispensing apparatus are all mounted in the accommodation space formed below the control panel base, so that structures to be mounted in a scattered manner are mounted together on the control panel base, thereby facilitating modular production, simplifying production processes, and reducing production costs. Because the upper end surface of the control panel base is provided with the detergent dispensing ports for dispensing solid detergents and liquid detergents, a user can use the washing machine more conveniently. An internal space of the control panel base of the washing machine is fully taken advantage of, and the novel layout is user-friendly. The chamber for dispensing solid detergents is of an integrally formed structure, and is simple in structure and convenient for mounting. The upper-layer space of the chamber is provided with the water input and uniformization structure, water is guided by the water guiding plates into the water slots at different side portions, and the water flow is scattered by using the water uniformization through holes, so that the water input is even, and washing powder dissolves thoroughly, and is unlikely to agglomerate.

### Description of Drawings

FIG. 1 is a schematic structural view showing a washing machine according to the present disclosure;
FIG. 2 is a partial view in a direction A-A in FIG. 1;
FIG. 3 is a view in a direction B-B in FIG. 1;
FIG. 4 is a schematic structural view showing a control panel base according to the present disclosure;
FIG. 5 is a schematic structural view showing a back of a control panel base according to the present disclosure;
FIG. 6 to FIG. 9 are schematic views showing controlling of automatic detergent dispensing according to the present disclosure;
FIG. 10 is a schematic structural view showing a chamber according to the present disclosure;
FIG. 11 is a schematic structural view showing assembling of a chamber according to the present disclosure;
FIG. 12 is a view in a direction C-C in FIG. 10; and
FIG. 13 is a view in a direction D-D in FIG. 10.

### Detailed description of the Embodiments

Specific embodiments of the present disclosure are further described below in detail in combination with accompanying drawings.

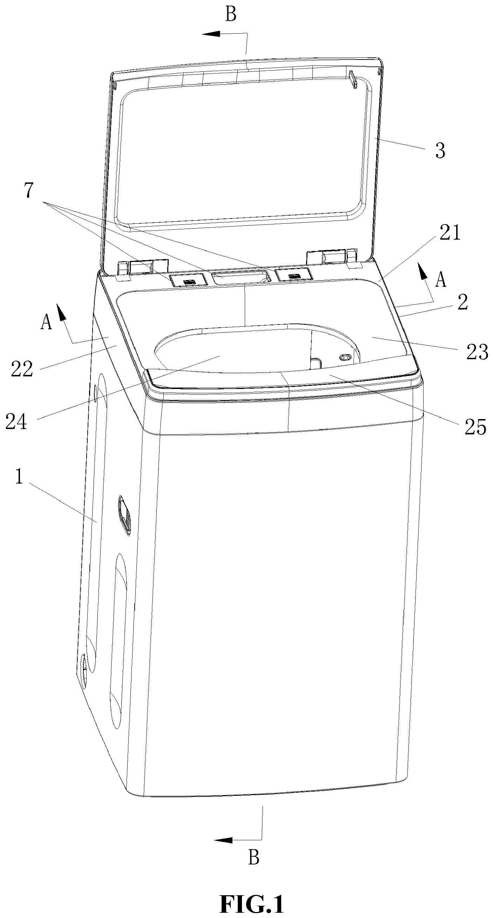

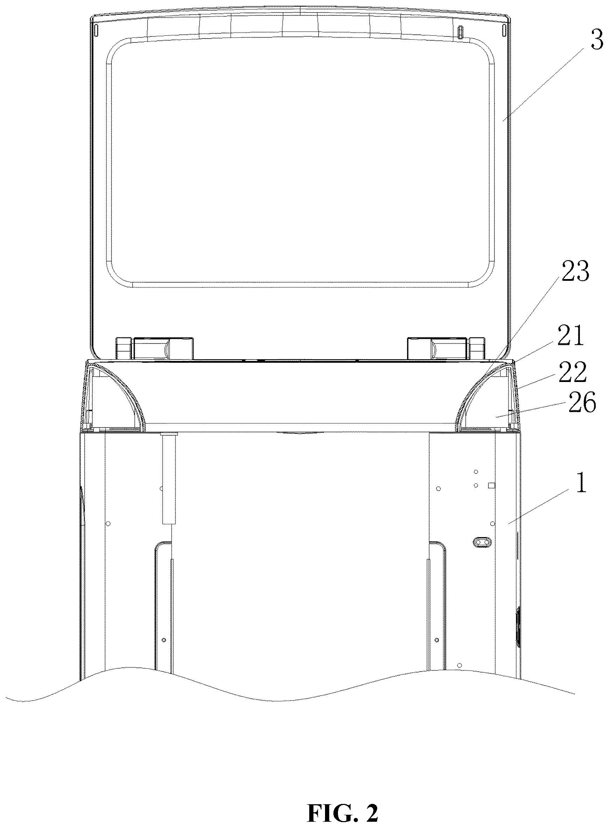

As shown in FIG. 1 to FIG. 5, a fully automatic washing machine includes a case 1, a control panel base 2 mounted at top of the case 1, and an upper cover 3 mounted on the control panel base 2. The upper cover 3 is hinge-connected to the control panel base 2 at a rear end. The control panel base 2 of the washing machine includes an upper end surface 21, an outer circumferential wall 22 and an inner circumferential wall 23 that are connected to the upper end surface 21 separately, and a clothing feeding port 24 formed by the inner circumferential wall. An operation display panel 25 is disposed at a front side of the control panel base 2, and is generally disposed at a front portion so as to be conveniently used by a user. An outer tub for containing water, and an inner tub disposed in the outer tub for containing clothing are mounted in the case. An upper portion of the inner tub is corresponding to the clothing feeding port. A driving apparatus and a drainage system (not shown in the figures) are disposed below the outer tub.

An accommodation space 26 integrally formed by the outer circumferential wall 22, the upper end surface 21 connected to the outer circumferential wall 22, and the inner circumferential wall 23 that forms the clothing feeding port 24 is below the control panel base 2 according to the present disclosure. At least one chamber 4 configured to dispense solid detergents, at least one container 5 configured to contain liquid detergents, and an automatic detergent dispensing apparatus 6 that is in communication with both the chamber 4 and the container 5 are disposed in the accommodation space 26. The upper end surface 21 of the control panel base is provided with at least two detergent dispensing ports 7, and each of the detergent dispensing ports 7 is respectively in communication with chamber 4 and the container 5 correspondingly.

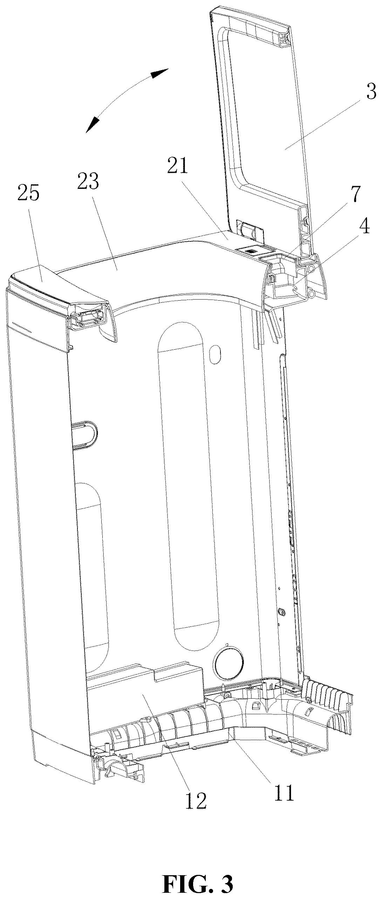

As shown in FIG. 3, the washing machine according to the present disclosure further includes a base 11 disposed at a lower portion of the case and a main control board 12 mounted on the base. The main control board 12 may also be disposed on a side wall of the case, or control modules for water feeding, water drainaging, motor driving and the like are dispersedly disposed in the case, and are connected to a main control module through data lines. Arrangements of foregoing structures relatively increase a volume of the accommodation space 26 at a lower portion of the control panel base, so as to contain a chamber and container, and the contained chamber and container are separately arranged from a control system, thereby improving safety performance of the washing machine.

The control panel base 2 is provided with a water inlet valve 27. The water inlet valve 27 is in communication with the automatic detergent dispensing apparatus 6. The automatic detergent dispensing apparatus 6 is in communication with the chamber 4 through a water outlet pipeline 8. The container 5 is in communication with the automatic detergent dispensing apparatus 6 through a liquid pumping pipeline 9. Liquid detergents pumped by the automatic detergent dispensing apparatus 6 flow to the chamber 4 through the water outlet pipeline 8, and then is discharged from the chamber 4.

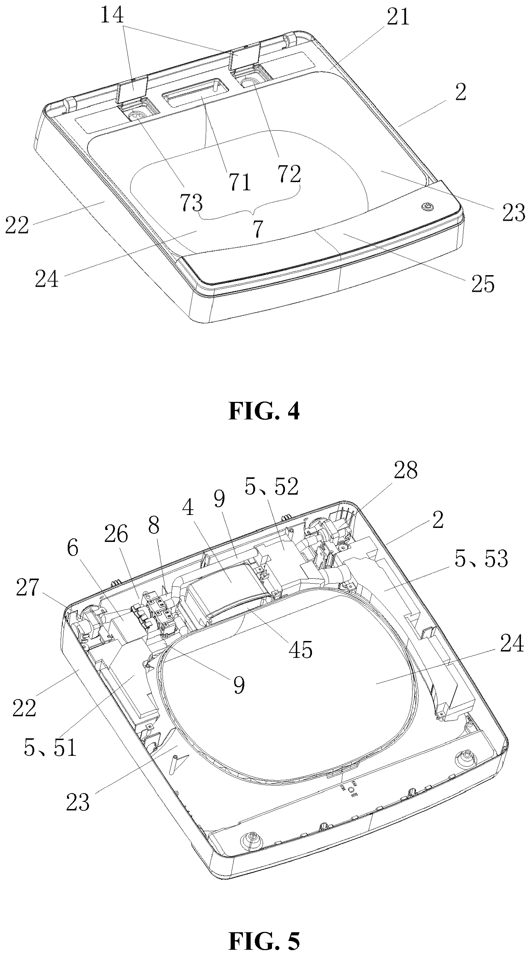

Further, in order to increase a liquid storage capacity of the container, at least two containers 5 are disposed in the accommodation space 26, at least one container 5 is formed by at least two sub-containers that are in communication with each other (referring to FIG. 5), the two sub-containers contain same liquid detergents, and the container is in communication with a detergent dispensing port through one of the sub-containers.

The automatic detergent dispensing apparatus 6 according to the present disclosure is an apparatus in which liquid detergents in the container are pumped using a negative pressure caused by flowing of inlet water through a Venturi tube for quantitative delivery.

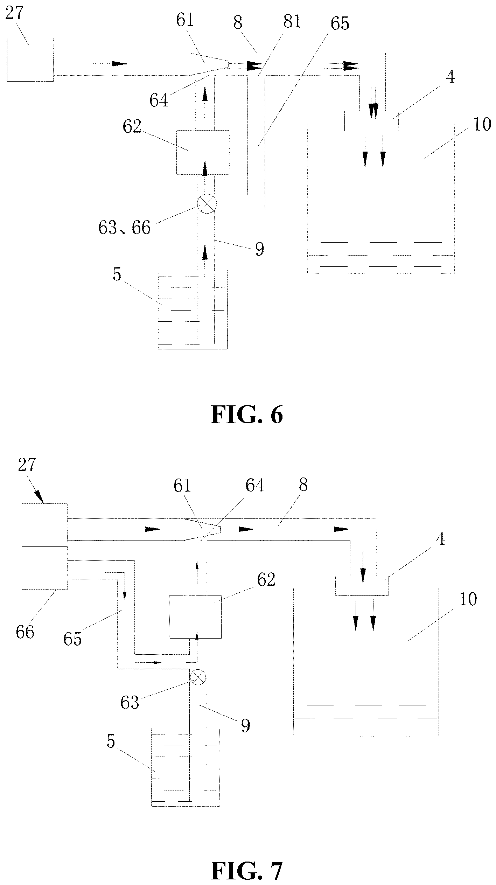

As shown in FIG. 6 to FIG. 9, the automatic detergent dispensing apparatus 6 according to the present invention includes a Venturi tube 61 through which flowing of water can generate a negative pressure, and a measurement apparatus 62 in communication with a negative pressure area of the Venturi tube. The measurement apparatus 62 is in communication with the container 5, and a detergent dispensing control valve 63 is disposed between the measurement apparatus 62 and the container 5. Corresponding to the negative pressure area of the Venturi tube, a liquid pumping port 64 in communication with the container 5 is disposed, and the measurement apparatus 62 for detecting a detergent dispensing amount is disposed between the liquid pumping port 64 and the container 5.

The automatic detergent dispensing apparatus 6 further includes a washing water path 65 for washing the measurement apparatus. A water inlet end of the washing water path 65 is in communication with a washing water outlet port 81 disposed on the water outlet pipeline 8. Inlet water from the water inlet valve 27 flows through the Venturi tube 61, then enters the measurement apparatus 62 through the washing water outlet port 81, and is discharged by a path connected from the measurement apparatus 62 to the negative pressure area of the Venturi tube. A washing control valve 66 is disposed on the washing water path 65.

When dispensing detergents, a path between the measurement apparatus 62 and the container 5 is opened, a path between the washing water path 65 and the measurement apparatus 62 is closed, and the water inlet valve 27 is opened. Water is input into the inner tub 10 through the water outlet pipeline 8. Detergents in the container 5 are pumped out by using a negative pressure caused by water flowing through the Venturi tube, and enter the water outlet pipeline 8 through the liquid pumping port 64 after measured by the measurement apparatus 62, and is washed into an inner tub 10 by an inlet water flow in the water outlet pipeline 8. When the measurement apparatus 62 detects that an amount of pumped detergents reach a corresponding required value or set value, the path between the measurement apparatus 62 and the container 5 is closed, a detergent dispensing is completed, and at the moment, a following step of measurement apparatus cleaning may be executed.

When cleaning the measurement apparatus, the water inlet valve 27 is opened, and water enters into the washing machine. At the moment, the path between the measurement apparatus 62 and the container 5 is closed, the path between the washing water path 65 and the measurement apparatus 62 is opened, and a water flow in the water outlet pipeline 8 passes through the Venturi tube 61. According to a Venturi effect principle, the water flow decreases from thick to fine, a flow rate of the inlet water increases, and the negative pressure area is caused. A washing water flow enters the water outlet pipeline 8 through the measurement apparatus 62 and the liquid pumping port 64, and is washed into the inner tub 10 by the inlet water flow in the water outlet pipeline 8. The foregoing process is also a separate water input step. During separate water input, the path between the washing water path 65 and the measurement apparatus 62 may also be closed in the foregoing step.

As shown in FIG. 6, there is one container 5 for containing liquid detergents in the automatic detergent dispensing apparatus 6 according to this embodiment. The washing control valve 66 on the washing water path 65 and the detergent dispensing control valve 63 are a same control valve which is a two-position three-way reversing valve provided with one outlet and two inlets. The outlet is in communication with the measurement apparatus 62, and the two inlets are respectively in communication with the container 5 and a water outlet end of the washing water path 65 correspondingly. The control valve controls opening/closing between the measurement apparatus 62 and the container 5, and also controls closing/opening between the measurement apparatus 62 and the washing water path 65.

As shown in FIG. 7, the washing control valve 66 according to this embodiment is integrated on the water inlet valve 27, and the water inlet valve 27 is a solenoid valve provided with at least two water outlets. One of the water outlets is connected to the water outlet pipeline 8, and the other of the water outlets is connected to the washing water path 65.

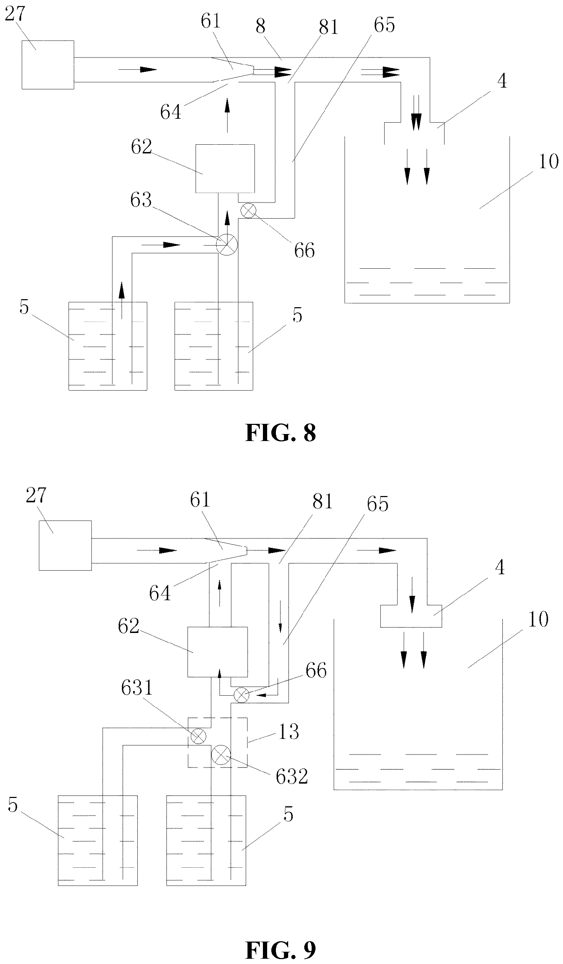

As shown in FIG. 8 and FIG. 9, a difference between this embodiment and the foregoing embodiments lies in that: in this embodiment, there are two containers 5 for containing detergents, and the two containers 5 are a detergent container and a softener container. Opening and closing of both a path between the detergent container and the measurement apparatus 62 and a path between the softener container and the measurement apparatus 62 are controlled by the same detergent dispensing control valve 63. The detergent dispensing control valve 63 is a two-position three-way reversing valve provided with one outlet and two inlets. The outlet is in communication with the measurement apparatus 62, and the two inlets are respectively in communication with the detergent container and the softener container correspondingly (referring to FIG. 8).

Alternatively, the measurement apparatus 62 is in communication with the detergent container and the softener container through a tee pipe 13, and there are two detergent dispensing control valves 63, which are a detergent control valve 631 and a softener control valve 632 (referring to FIG. 9).

As shown in FIG. 4 and FIG. 5, a rear portion of the upper end surface 21 of the control panel base according to the present disclosure is provided with three detergent dispensing ports 7, and a front portion of the upper end surface 21 is provided with the operation display panel 25. In a closed state, the upper cover 3 of the washing machine covers the detergent dispensing ports 7, and exposes the operation display panel 25 at the front portion. Among the three detergent dispensing ports 7, a first detergent dispensing port 71 is in communication with the chamber 4 for dispensing solid detergents, and the chamber 4 is below the first detergent dispensing port 71 and is generally configured to dispense washing powder; and a second detergent dispensing port 72 and a third detergent dispensing port 73 are in communication with different containers respectively, and the second detergent dispensing port 72 and the third detergent dispensing port 73 are each provided with a door cover 14 that can be opened and closed.

According to a preferred scheme of this embodiment, the second detergent dispensing port 72 and the third detergent dispensing port 73 are disposed on two sides of the first detergent dispensing port 71 respectively; the containers 5 include a first container 51, a second container 52, and a third container 53; the third container 53 is in communication with the second container 52; the first container 51 is in communication with the second detergent dispensing port 72; the second container 52 is in communication with the third detergent dispensing port 73; the first container 51, the second container 52, the third container 53, and the chamber 4 are distributed on left side and right side of the clothing feeding port 24, and in the accommodation space 26 at a rear side of the clothing feeding port 24. The first container 51 is a container for containing softeners, and the second container 52 and the third container 53 are containers for containing liquid detergents.

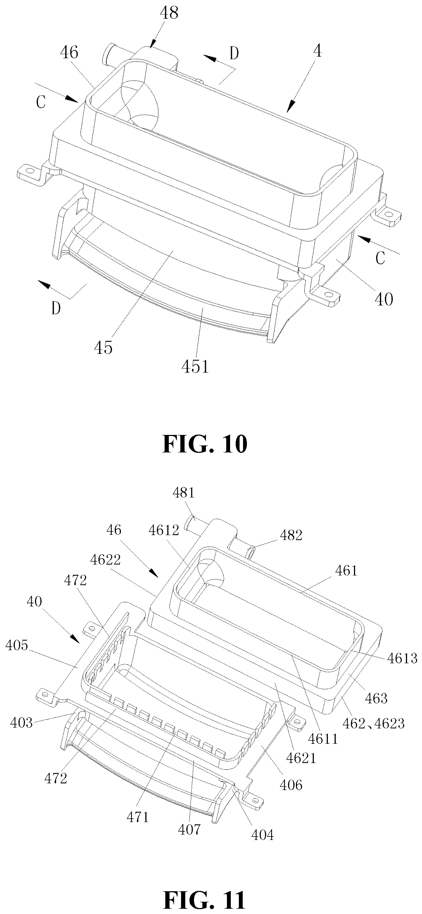

As shown in FIG. 10 to FIG. 13, the chamber 4 according to the present disclosure is of a structure of a box with an opening at an upper portion. The opening is corresponding to a detergent dispensing port 7 (referring to FIG. 3). A partition plate 41 is disposed in the box, and divides internal of the box into an upper-layer space 42 and a lower-layer space 43. The partition plate 41 is provided with a water leaking port 44 that is in communication with the upper-layer space 42 and the lower-layer space 43. The upper-layer space 42 is provided with a water input and uniformization structure. The lower-layer space 43 is provided with a water spraying port 45. Bottom of the water spraying port 45 is provided with a flow guiding plate 451 extending forwardly. The flow guiding plate 451 tilts downwardly, so as to facilitate spraying of water into the inner tub.

The chamber 4 includes a box body 40 and an annular buckle cover 46. The box body 40 and the annular buckle cover 46 engages on a periphery of the opening to form a water channel 47. The water channel 47 is provided with a water inlet 48. An inner side wall of the water channel 47 is further provided with a plurality of water uniformization through holes 471 in communication with the upper-layer space. A water guiding plate 472 is disposed in the water channel 47. The water uniformization through holes 471 and the water guiding plate 472 form the water input and uniformization structure.

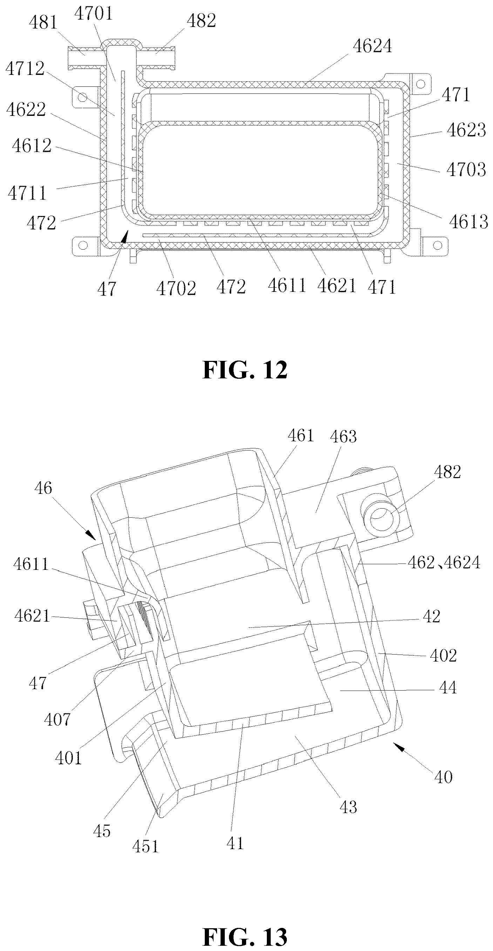

As shown in FIG. 12, the water channel 47 is formed by three water slots 4701, 4702, and 4703 connected and having different directions. A water guiding plate 472 is disposed in each of the water slots in sequence starting from the water slot 4701 in which the water inlet 48 is located to a water slot before the last water slot 4703. The water guiding plate 472 extends along a water flow direction in the water slot, and divides the water slot into an inner water path 4711 and an outer water path 4712 by coordinating with inner and outer side walls of the water slot. The inner water path 4711 discharges water through a corresponding water uniformization through hole 471, an end of the inner water path extends from the water guiding plate 472 to a starting end of the next water slot 4702 or 4703, and is closed at the starting end. The outer water path 4712 guides water into the next water slot 4702 or 4703, and discharges water through the water uniformization through hole 471 corresponding to the last water slot 4703.

As shown in FIG. 11 to FIG. 13, a side wall of the box body 40 is formed by four side plates including a front side plate 401, a rear side plate 402, a left side plate 403, and a right side plate 404. Outer walls of the left side plate 403, the right side plate 404, and the front side plate 401 are respectively provided with a left boss 405, a right boss 406, and a front boss 407 that protrude outwardly. A height of each boss is lower than that of a top end of a corresponding side plate. Top ends of the left side plate 403, the right side plate 404, and the front side plate 401 are evenly provided with a plurality of notches forming the water uniformization through holes 471. The left boss 405 and the front boss 407 are provided with the water guiding plates 472. The annular buckle cover 46 is formed by an inner peripheral frame 461, an outer peripheral frame 462, and an annular top cover 463, and has a section of an h-shaped structure. The inner peripheral frame 461 is located in the opening of the box body 40. There is a water leaking gap between a front frame 4611 of the inner peripheral frame 461 and the front side plate 401, between a left frame 4612 of the inner peripheral frame 461 and the left side plate 403, and between a right frame 4613 of the inner peripheral frame 461 and the right side plate 404. A front frame 4621, a left frame 4622, and a right frame 4623 of the outer peripheral frame 462 are lap-connected to the front boss 407, the left boss 405, and the right boss 406 respectively in a sealed manner, to coordinate to form an integral water channel 47, which is formed by a left water slot, a front water slot, and a right water slot that are connected in sequence. A rear frame 4624 of the outer peripheral frame 462 is connected to the rear side plate 402 in a sealed manner. The front side plate 401 corresponding to the lower-layer space 43 is provided with the water spraying port 45.

As shown in FIG. 5, the control panel base 2 according to the present disclosure is further provided with a hot water valve 28. The hot water valve 28 is in direct communication with the chamber 4 through a hot water pipeline. The annular buckle cover 46 is provided with two water inlets 481 and 482. The hot water valve 28 is in communication with the first water inlet 481, and the second water inlet 482 is in communication with the automatic detergent dispensing apparatus 6 through the water outlet pipeline 8. If hot water is needed for washing, water may be input by using the two water inlets at the same time; and if hot water is not needed for washing, the hot water valve 28 is turned off, and water is input directly through the water inlet valve 27, the water enters the chamber 4 through the Venturi tube 61, the water outlet pipeline 8, and the second water inlet 482 successively, and is discharged by the water spraying port 45 into the inner tub.

The implementation schemes in the foregoing embodiments may further undergo combination or replacement. Moreover, the embodiments only describe preferred embodiments of the present disclosure, but are not intended to limit the scope of the present disclosure. Modifications and improvements made to the technical scheme of the present disclosure by those skilled in the art without departing from the design idea of the present disclosure all fall within the protection scope of the present claims.

## Claims

1. A washing machine comprising a case (1) and a control panel base (2) with function of automatically adding detergent, wherein the control panel base (2) is mounted at top of the case (1) and an upper cover (3) is mounted on the control panel base, the control panel base comprising: at least one chamber (4) configured to dispense solid detergents, at least one container (5) configured to contain liquid detergents, and an automatic detergent dispensing apparatus (6) which is in communication with both the chamber (4) and the container (5), a water inlet valve (27) in communication with the automatic detergent dispensing apparatus (6), the control panel base (2) comprising an upper end surface (21) provided with at least two detergent dispensing ports (7), an outer circumferential wall (22), an inner circumferential wall (23), and a clothing feeding port formed by the inner circumferential wall (23); wherein the outer circumferential wall (22) and the inner circumferential wall (23) are connected to the upper end surface (21) separately, wherein each of the detergent dispensing ports is respectively in communication with the chamber (4) and the container (5) correspondingly; the control panel base (2) further comprising an accommodation space formed by the outer circumferential wall (22), the upper end surface (21) connected to the outer circumferential wall (22), and the inner circumferential wall (23) is below the control panel base; and the chamber (4), the container (5) and the automatic detergent dispensing apparatus (6) are all disposed in the accommodation space;
**characterized in that** the automatic detergent dispensing apparatus (6) comprises a Venturi tube (61) through which flowing of water can generate a negative pressure, and a measurement apparatus (62) in communication with a negative pressure area of the Venturi tube (61); the measurement apparatus (62) is in communication with the container (5); and a detergent dispensing control valve (63) is disposed between the measurement apparatus (62) and the container (5), wherein the Venturi tube (61) is in communication with the chamber (4) through a water outlet pipeline (8) such that the automatic detergent dispensing apparatus (6) is configured to pump liquid detergents in the container (5) using the negative pressure caused by flowing of inlet water from the water inlet valve (27) through the Venturi tube (61) for quantitative delivery, and to cause the liquid detergents pumped from the container (5) to flow to the chamber (4) through the water outlet pipeline (8).

2. The washing machine according to claim 1, wherein: the automatic detergent dispensing apparatus (6) further comprises a washing water path (65) for the measurement apparatus (62); wherein water is input through the washing water path (65) into the measurement apparatus (62), and is then pumped by the negative pressure to a path, at which the Venturi tube (61) is located, for discharging.

3. The washing machine according to claim 1, wherein: the chamber (4) is of a structure of a box with an opening at an upper portion; wherein the opening is corresponding to a detergent dispensing port (7); a partition plate (41) is disposed in the box, and divides the internal space of the box into an upper-layer space (42) and a lower-layer space (43); the partition plate (41) is provided with a water leaking port (44) that is in communication with the upper-layer space (42) and the lower-layer space (43); the upper-layer space (42) is provided with a water input and uniformization structure; and the lower-layer space (43) is provided with a water spraying port (45); and
wherein: the chamber (4) comprises a box body (40) and an annular buckle cover (46); wherein the box body (40) and the annular buckle cover (46) engages on a periphery of the opening to form a water channel (47); the water channel (47) is provided with a water inlet (48); an inner side wall of the water channel (47) is further provided with a plurality of water uniformization through holes (471) in communication with the upper-layer space (42); a water guiding plate (472) is disposed in the water channel (47); and the water uniformization through holes (471) and the water guiding plate (472) form the water input and uniformization structure.

4. The washing machine according to claim 3, wherein: the water channel (47) is formed by at least two water slots connected and having different directions; a water guiding plate (472) is disposed in each of the water slots starting from a water slot (4701) in which the water inlet (48) is located to a water slot before the last water slot; the water guiding plate (472) extends along a water flow direction in the water slot, and divides the water slot into inner and outer water paths (4711, 4712) by coordinating with inner and outer side walls of the water slot; the inner water path (4711) discharges water through a corresponding water uniformization through hole (471); an end of the inner water path extends from the water guiding plate (472) to a starting end of a next water slot, and is closed at the starting end; and the outer water path (4712) guides water into the next water slot.

5. The washing machine according to claim 4, wherein: the water slot is formed by engaging, in a sealed manner, outwardly protruding bosses and the annular buckle cover (46) that are at periphery of an opening of the box body (40).

6. The washing machine according to claim 4, wherein: a side wall of the box body (40) is formed by four side plates comprising a front side plate (401), a rear side plate (402), a left side plate (403), and a right side plate (404); wherein outer walls of the left side plate (403), the right side plate (404), and the front side plate (401) are respectively provided with a left boss (405), a right boss (406), and a front boss (407) that protrude outwardly; a height of each boss is lower than that of a top end of a corresponding side plate; top ends of the left side plate (403), the right side plate (404), and the front side plate (401) are evenly provided with a plurality of notches forming the water uniformization through holes (471); the bosses are provided with the water guiding plates (472); the annular buckle cover (46) is formed by an inner peripheral frame (461), an outer peripheral frame (462), and an annular top cover (463), and has a section of an h-shaped structure; the inner peripheral frame (461) is located in the opening of the box body (40); there is a water leaking gap between a front frame (4611) of the inner peripheral frame (461) and the front side plate (401), between a left frame (4612) of the inner peripheral frame (461) and the left side plate (403), and between a right frame (4613) of the inner peripheral frame (461) and the right side plate (404); a front frame (4621), a left frame (4622), and a right frame (4623) of the outer peripheral frame (462) are lap-connected to the front boss (407), the left boss (405), and the right boss (406) respectively in a sealed manner, to coordinate to form a water channel (47); and a rear frame (4624) of the outer peripheral frame (462) is connected to the rear side plate (402) in a sealed manner.

7. The washing machine according to claim 1, wherein: there are at least two containers (5); and at least one container (5) is formed by at least two sub-containers that are in communication with each other, and the container (5) is in communication with a detergent dispensing port (7) through one of the sub-containers.

8. The washing machine according to claim 1, wherein: the detergent dispensing port (7) is provided with a door cover (14) that can be opened and closed.

9. The washing machine according to any one of claims 1 to 7, wherein: a rear portion of the upper end surface (21) of the control panel base is provided with three detergent dispensing ports (7); a front portion of the upper end surface (21) is provided with an operation display panel (25); a first detergent dispensing port (71) is in communication with the chamber (4) for dispensing solid detergents; a second detergent dispensing port (72) and a third detergent dispensing port (73) are in communication with corresponding containers respectively; and the second detergent dispensing port (72) and the third detergent dispensing port (73) are each provided with a door cover (14) that can be opened and closed.

10. The washing machine according to claim 9, wherein: the second detergent dispensing port (72) and the third detergent dispensing port (73) are disposed on two sides of the first detergent dispensing port (71) respectively; there are two containers (5); the two containers (5) are in communication with the second detergent dispensing port (72) and the third detergent dispensing port (73) respectively; and the containers (5) and the chamber (4) are distributed in the accommodation space.

11. The The washing machine according to claim 10, wherein: one of the two containers (5) is formed by two sub-containers that are in communication with each other.

## Patentansprüche

1. Waschmaschine umfassend ein Gehäuse (1) und eine Bedienfeldbasis (2) mit Funktion zum automatischen Hinzufügen von Waschmittel, wobei die Bedienfeldbasis (2) auf der Oberseite des Gehäuses (1) montiert ist, und eine obere Abdeckung (3) auf der Bedienfeldbasis montiert ist, wobei die Bedienfeldbasis umfasst: mindestens eine zur Abgabe von festen Waschmitteln ausgelegte Kammer (4), mindestens einen Behälter (5), der dazu ausgelegt ist, Flüssigwaschmittel zu enthalten, sowie eine automatische Waschmittelabgabevorrichtung (6), die mit sowohl der Kammer (4) als auch dem Behälter (5) in Kommunikation steht, ein mit der automatischen Waschmittelabgabevorrichtung (6) in Kommunikation stehendes Wassereinlassventil (27), wobei die Bedienfeldbasis (2) eine obere Endfläche (21) umfasst, die mit mindestens zwei Waschmittelabgabeöffnungen (7) versehen ist, eine Außenumfangswandung (22), eine Innenumfangswandung (23) und eine durch die Innenumfangswandung (23) gebildete Kleidungszufuhröffnung; wobei die Außenumfangswandung (22) und die Innenumfangswandung (23) getrennt mit der oberen Endfläche (21) verbunden sind, wobei jede der Waschmittelabgabeöffnungen jeweils entsprechend mit der Kammer (4) und dem Behälter (5) in Kommunikation steht; wobei die Bedienfeldbasis (2) außerdem einen durch die Außenumfangswandung (22) gebildeten Aufnahmeraum umfasst, die obere Endfläche (21) mit der Außenumfangswandung (22) verbunden ist, und die Innenumfangswandung (23) sich unter der Bedienfeldbasis befindet; und die Kammer (4), der Behälter (5) und die automatische Waschmittelabgabevorrichtung (6) alle im Aufnahmeraum untergebracht sind;
**dadurch gekennzeichnet, dass** die automatische Waschmittelabgabevorrichtung (6) ein Venturirohr (61), durch das ein Wasserstrom einen Unterdruck erzeugen kann, und eine mit dem Unterdruckbereich des Venturirohrs (61) in Kommunikation stehende Messvorrichtung (62) umfasst; welche Messvorrichtung (62) mit dem Behälter (5) in Kommunikation steht; und ein Waschmittelabgabesteuerventil (63) zwischen der Messvorrichtung (62) und dem Behälter (5) angeordnet ist, wobei das Venturirohr (61) durch eine Wasserauslaufrohrleitung (8) mit der Kammer (4) in Kommunikation steht, so dass die automatische Waschmittelabgabevorrichtung (6) ausgelegt ist, um Flüssigwaschmittel in den Behälter (5) unter Verwendung des Unterdrucks, der durch Strömen von Einlasswasser aus dem Wassereinlaufventil (27) durch das Venturirohr (61) für die quantitative Lieferung verursacht wird, zu pumpen, und um zu bewirken, dass die aus dem Behälter (5) gepumpten Flüssigwaschmittel zu der Kammer (4) durch die Wasserauslaufrohrleitung (8) strömen.

2. Waschmaschine nach Anspruch 1, wobei: die automatische Waschmittelabgabevorrichtung (6) ferner einen Waschwasserweg (65) für die Messvorrichtung (62) umfasst; wobei Wasser durch den Waschwasserweg (65) in die Messvorrichtung (62) eingegeben wird und dann durch den Unterdruck zu einem Weg, an dem sich das Venturirohr (61) befindet, zum Ablassen gepumpt wird.

3. Waschmaschine nach Anspruch 1, wobei: die Kammer (4) eine Kastenstruktur mit einer Öffnung an einem oberen Abschnitt aufweist; wobei die Öffnung einer Waschmittelabgabeöffnung (7) entspricht; eine Trennplatte (41) im Kasten angeordnet ist und den inneren Raum des Kastens in einen Raum der oberen Schicht (42) und einen Raum der unteren Schicht (43) unterteilt; die Trennplatte (41) mit einer Wasserlecköffnung (44) versehen ist, die mit dem Raum der oberen Schicht (42) und dem Raum der unteren Schicht (43) in Kommunikation steht; der Raum der oberen Schicht (42) mit einer Wassereintritts- und Gleichförmigkeitsstruktur versehen ist; und der Raum der unteren Schicht (43) mit einer Wassersprühöffnung (45) versehen ist; und wobei: die Kammer (4) einen Kastenkörper (40) und eine ringförmige Schnallenabdeckung (46) umfasst; wobei der Kastenkörper (40) und die ringförmige Schnallenabdeckung (46) an einem Umfang der Öffnung angreifen, um einen Wasserkanal (47) zu bilden; der Wasserkanal (47) mit einem Wassereinlass (48) versehen ist; eine innere Seitenwand des Wasserkanals (47) ferner mit einer Vielzahl von Wassergleichförmigkeits-Durchgangslöchern (471) versehen ist, die mit dem Raum der oberen Schicht (42) in Kommunikation stehen; eine Wasserführungsplatte (472) im Wasserkanal (47) angeordnet ist; und die Wassergleichförmigkeits-Durchgangslöcher (471) und die Wasserführungsplatte (472) die Wassereintritt- und Gleichförmigkeitsstruktur bilden.

4. Waschmaschine nach Anspruch 3, wobei: der Wasserkanal (47) durch mindestens zwei Wasserschlitze gebildet ist, die verbunden sind und unterschiedliche Richtungen aufweisen; eine Wasserführungsplatte (472) in jedem der Wasserschlitze angeordnet ist, ausgehend von einem Wasserschlitz (4701), in dem sich der Wassereinlass (48) zu einem Wasserschlitz vor dem letzten Wasserschlitz befindet; die Wasserführungsplatte (472) sich entlang einer Wasserströmungsrichtung in dem Wasserschlitz erstreckt und den Wasserschlitz in innere und äußere Wasserwege (4711, 4712) unterteilt, indem sie mit inneren und äußeren Seitenwänden des Wasserschlitzes koordiniert ist; der innere Wasserweg (4711) Wasser durch ein entsprechendes Wassergleichförmigkeits-Durchgangsloch (471) abgibt; ein Ende des inneren Wasserwegs sich von der Wasserführungsplatte (472) zu einem Anfangsende eines nächsten Wasserschlitzes erstreckt und am Anfangsende geschlossen ist; und der äußere Wasserweg (4712) Wasser in den nächsten Wasserschlitz führt.

5. Waschmaschine nach Anspruch 4, wobei: der Wasserschlitz durch dichtes Eingreifen von nach außen ragenden Vorsprüngen und der ringförmigen Schnallenabdeckung (46) gebildet ist, die sich am Umfang einer Öffnung des Kastenkörpers (40) befinden.

6. Waschmaschine nach Anspruch 4, wobei: eine Seitenwand des Kastenkörpers (40) durch vier Seitenplatten gebildet ist, die eine vordere Seitenplatte (401), eine hintere Seitenplatte (402), eine linke Seitenplatte (403) und eine rechte Seitenplatte (404) umfassen; wobei Außenwände der linken Seitenplatte (403), der rechten Seitenplatte (404) und der vorderen Seitenplatte (401) jeweils mit einem linken Vorsprung (405), einem rechten Vorsprung (406) und einem vorderen Vorsprung (407) versehen sind, die nach außen vorstehen; eine Höhe jedes Vorsprungs niedriger als die eines oberen Endes einer entsprechenden Seitenplatte ist; obere Enden der linken Seitenplatte (403), der rechten Seitenplatte (404) und der vorderen Seitenplatte (401) gleichmäßig mit einer Vielzahl von Kerben versehen sind, die die Wassergleichförmigkeits-Durchgangslöcher (471) bilden; die Vorsprünge mit den Wasserführungsplatten (472) versehen sind; die ringförmige Schnallenabdeckung (46) durch einen Innenumfangsrahmen (461), einen Außenumfangsrahmen (462) und eine ringförmige obere Abdeckung (463) gebildet ist und einen Abschnitt einer h-förmigen Struktur aufweist; der Innenumfangsrahmen (461) in der Öffnung des Kastenkörpers (40) angeordnet ist; ein Wasserleckspalt zwischen einem vorderen Rahmen (4611) des Innenumfangsrahmens (461) und der vorderen Seitenplatte (401), zwischen einem linken Rahmen (4612) des Innenumfangsrahmens (461) und der linken Seitenplatte (403) sowie zwischen einem rechten Rahmen (4613) des Innenumfangsrahmens (461) und der rechten Seitenplatte (404) vorhanden ist; ein vorderer Rahmen (4621), ein linker Rahmen (4622) und ein rechter Rahmen (4623) des Außenumfangsrahmens (462) überlappend mit dem vorderen Vorsprung (407), dem linken Vorsprung (405) und dem rechten Vorsprung (406) jeweils in abgedichter Weise verbunden sind, um zu koordinieren, um einen Wasserkanal (47) zu bilden; und ein hinterer Rahmen (4624) des Außenumfangsrahmens (462) mit der hinteren Seitenplatte (402) in abgedichter Weise verbunden ist.

7. Waschmaschine nach Anspruch 1, wobei: mindestens zwei Behälter (5) vorhanden sind; und mindestens ein Behälter (5) durch mindestens zwei miteinander in Kommunikation stehende Unterbehälter gebildet ist, und der Behälter (5) durch einen der Unterbehälter mit einer Waschmittelabgabeöffnung (7) in Kommunikation steht.

8. Waschmaschine nach Anspruch 1, wobei: die Waschmittelabgabeöffnung (7) mit einer öffenbaren und schließbaren Türabdeckung (14) versehen ist.

9. Waschmaschine nach einem der Ansprüche 1 bis 7, wobei: ein hinterer Abschnitt der oberen Endfläche (21) der Bedienfeldbasis mit drei Waschmittelabgabeöffnungen (7) versehen ist; ein vorderer Abschnitt der oberen Endfläche (21) mit einem Betriebsanzeigefeld (25) versehen ist; eine erste Waschmittelabgabeöffnung (71) mit der Kammer (4) zur Abgabe fester Waschmittel in Kommunikation steht; eine zweite Waschmittelabgabeöffnung (72) und eine dritte Waschmittelabgabeöffnung (73) jeweils mit entsprechenden Behältern in Kommunikation stehen; und die zweite Waschmittelabgabeöffnung (72) und die dritte Waschmittelabgabeöffnung (73) jeweils mit einer öffenbaren und schließbaren Türabdeckung (14) versehen sind.

10. Waschmaschine nach Anspruch 9, wobei: die zweite Waschmittelabgabeöffnung (72) und die dritte Waschmittelabgabeöffnung (73) jeweils auf zwei Seiten der ersten Waschmittelabgabeöffnung (71) angeordnet sind; zwei Behälter (5) vorhanden sind; die beiden Behälter (5) mit der zweiten Waschmittelabgabeöffnung (72) bzw. der dritten Waschmittelabgabeöffnung (73) in Kommunikation stehen; und die Behälter (5) und die Kammer (4) in dem Aufnahmeraum verteilt sind.

11. Waschmaschine nach Anspruch 10, wobei: einer der beiden Behälter (5) durch zwei miteinander in Kommunikation stehende Unterbehälter gebildet ist.

## Revendications

1. Machine à laver comprenant un boîtier (1) avec une base de panneau de commande (2) à fonction d'ajout automatique de détergent, dans laquelle la base de panneau de commande (2) est montée à la partie supérieure du boîtier (1) et un couvercle supérieur est monté sur la base de panneau de commande, la base de panneau de commande comprenant : au moins une chambre (4) configurée pour distribuer des détergents solides, au moins un récipient (5) configuré pour contenir des détergents liquides, et un dispositif de distribution automatique de détergent (6) qui est en communication à la fois avec la chambre (4) et le récipient (5), une vanne d'entrée d'eau (27) en communication avec le dispositif de distribution automatique de détergent (6), la base de panneau de commande (2) comprenant une surface d'extrémité supérieure (21) pourvue d'au moins deux orifices de distribution de détergent (7), une paroi circonférentielle extérieure (22), une paroi circonférentielle intérieure (23), et un orifice alimentation de vêtements formé par la paroi circonférentielle intérieure (23) ; dans laquelle la paroi circonférentielle extérieure (22) et la paroi circonférentielle intérieure (23) sont reliées à la surface d'extrémité supérieure (21) séparément, dans laquelle chacun des orifices de distribution de détergent est respectivement en communication avec la chambre (4) et le récipient (5) de manière correspondante ; la base de panneau de commande (2) comprenant en outre un espace de logement formé par la paroi circonférentielle extérieure (22), la surface d'extrémité supérieure (21) est reliée à la paroi circonférentielle extérieure (22), et la paroi circonférentielle intérieure (23) est au-dessous de la base de panneau de commande ; et la chambre (4), le récipient (5) et le dispositif de distribution automatique de détergent (6) sont tous disposés dans l'espace de logement ;
**caractérisée en ce que** le dispositif de distribution automatique de détergent (6) comprend un tube Venturi (61) à travers lequel l'écoulement d'eau peut générer une pression négative, et un dispositif de mesure (62) en communication avec une zone de pression négative du tube Venturi (61) ; le dispositif de mesure (62) est en communication avec le récipient (5) ; et une soupape de commande de distribution de détergent (63) est disposée entre le dispositif de mesure (62) et le récipient (5), dans laquelle le tube de Venturi (61) est en communication avec la chambre (4) à travers une conduite de sortie d'eau (8) si bien que le dispositif de distribution automatique de détergent (6) est configuré de manière à pomper des détergents liquides dans le récipient (5) en utilisant la pression négative provoquée par l'écoulement de l'eau d'entrée à partir de la vanne de entrée d'eau (27) à travers le tube Venturi (61) pour une livraison quantitative, et à amener les détergents liquides pompés à partir du récipient (5) de s'écouler vers la chambre (4) à travers la conduite de sortie d'eau (8).

2. Machine à laver selon la revendication 1, dans laquelle : le dispositif de distribution automatique de détergent (6) comprend en outre un trajet d'eau de lavage (65) pour le dispositif de mesure (62) ; dans laquelle l'eau est introduite à travers le trajet d'eau de lavage (65) dans le dispositif de mesure (62), puis est pompée par la pression négative vers un trajet, où se trouve le tube de Venturi (61) pour la décharge.

3. Machine à laver selon la revendication 1, dans laquelle : la chambre (4) est constituée d'une structure de boîte avec une ouverture à une partie supérieure ; dans laquelle l'ouverture correspond à un orifice de distribution de détergent (7); une plaque de séparation (41) est disposée dans la boîte, et divise l'espace intérieur de la boîte en un espace de couche supérieure (42) et un espace de couche inférieure (43) ; la plaque de séparation (41) est pourvue d'un orifice de fuite d'eau (44) qui est en communication avec l'espace de couche supérieure (42) et l'espace de couche inférieure (43) ; l'espace de la couche supérieure (42) est pourvu d'une structure d'entrée d'eau et d'uniformisation ; et l'espace de couche inférieure (43) est pourvu d'un orifice de pulvérisation d'eau (45) ; et
dans laquelle : la chambre (4) comprend un corps de boîte (40) et un couvercle de boucle annulaire (46) ; dans laquelle le corps de boîte (40) et le couvercle de boucle annulaire (46) s'engagent sur une périphérie de l'ouverture pour former un canal d'eau (47) ; le canal d'eau (47) est pourvu d'une entrée d'eau (48) ; une paroi latérale intérieure du canal d'eau (47) est en outre pourvue d'une pluralité de trous traversants d'uniformisation d'eau (471) en communication avec l'espace de couche supérieure (42) ; une plaque de guidage d'eau (472) est disposée dans le canal d'eau (47) ; et les trous traversants d'uniformisation d'eau (471) et la plaque de guidage d'eau (472) forment la structure d'entrée et d'uniformisation d'eau.

4. Machine à laver selon la revendication 3, dans laquelle : le canal d'eau (47) est formé par au moins deux fentes d'eau raccordées et ayant des directions différentes ; une plaque de guidage d'eau (472) est disposée dans chacune des fentes d'eau à partir d'une fente d'eau (4701) dans laquelle l'entrée d'eau (48) est située jusqu'à une fente d'eau avant la dernière fente d'eau ; la plaque de guidage d'eau (472) s'étend le long d'une direction d'écoulement d'eau dans la fente d'eau, et divise la fente d'eau en trajets d'eau intérieur et extérieur (4711, 4712) en se coordonnant avec les parois latérales intérieure et extérieure de la fente d'eau ; le trajet d'eau intérieur (4711) décharge l'eau à travers un trou traversant d'uniformisation d'eau correspondant (471) ; une extrémité du trajet d'eau intérieur s'étend de la plaque de guidage d'eau (472) à une extrémité de départ d'une fente d'eau suivante, et est fermée à l'extrémité de départ ; et le trajet d'eau extérieur (4712) guide l'eau dans la fente d'eau suivante.

5. Machine à laver selon la revendication 4, dans laquelle : la fente d'eau est formée en engageant, de manière étanche, des bossages saillants vers l'extérieur et le couvercle de boucle annulaire (46) qui sont à la périphérie de l'ouverture du corps de boîte (40).

6. Machine à laver selon la revendication 4, dans laquelle : une paroi latérale du corps de boîte (40) est formée de quatre plaques latérales comprenant une plaque latérale avant (401), une plaque latérale arrière (402), une plaque latérale gauche (403) et un plaque latérale droite (404) ; dans laquelle les parois extérieures de la plaque latérale gauche (403), de la plaque latérale droite (404) et de la plaque latérale avant (401) sont respectivement pourvues d'un bossage gauche (405), d'un bossage droit (406) et d'un bossage avant (407) qui font saillie vers l'extérieur ; une hauteur de chaque bossage est inférieure à celle d'une extrémité supérieure d'une plaque latérale correspondante ; les extrémités supérieures de la plaque latérale gauche (403), de la plaque latérale droite (404) et de la plaque latérale avant (401) sont uniformément pourvues d'une pluralité d'encoches formant les trous traversant d'uniformisation d'eau (471) ; les bossages sont munis des plaques de guidage d'eau (472) ; le couvercle de boucle annulaire (46) est formé par un cadre périphérique intérieur (461), un cadre périphérique extérieur (462) et un couvercle supérieur annulaire (463), et a une section d'une structure en forme de H ; le cadre périphérique intérieur (461) est situé dans l'ouverture du corps de boîte (40) ; il y a un espace de fuite d'eau entre un cadre avant (4611) du cadre périphérique intérieur (461) et la plaque latérale avant (401), entre un cadre gauche (4612) du cadre périphérique intérieur (461) et la plaque latérale gauche (403), et entre un cadre droit (4613) du cadre périphérique intérieur (461) et la plaque latérale droite (404) ; un cadre avant (4621), un cadre gauche (4622) et un cadre droit (4623) du cadre périphérique extérieur (462) sont reliés par recouvrement au bossage avant (407), au bossage gauche (405) et au bossage droit (406) respectivement de manière étanche, pour se coordonner pour former un canal d'eau (47) ; et un cadre arrière (4624) du cadre périphérique extérieur (462) est raccordé à la plaque latérale arrière (402) de manière étanche.

7. Machine à laver selon la revendication 1, dans laquelle : il y a au moins deux récipients (5) ; et au moins un récipient (5) est formé par au moins deux sous-récipients qui sont en communication l'un avec l'autre, et le récipient (5) est en communication avec un orifice de distribution de détergent (7) à travers l'un des sous-récipients.

8. Machine à laver selon la revendication 1, dans laquelle : l'orifice de distribution de détergent (7) est pourvu d'un couvercle de porte (14) qui peut être ouvert et fermé.

9. Machine à laver selon l'une quelconque des revendications 1 à 7, dans laquelle : une partie arrière de la surface d'extrémité supérieure (21) de la base de panneau de commande est pourvue de trois orifices de distribution de détergent (7) ; une partie avant de la surface d'extrémité supérieure (21) est pourvue d'un panneau d'affichage de fonctionnement (25) ; un premier orifice de distribution de détergent (71) est en communication avec la chambre (4) de distribution de détergents solides ; un deuxième orifice de distribution de détergent (72) et un troisième orifice de distribution de détergent (73) sont en communication avec les récipients correspondants respectivement ; et le deuxième orifice de distribution de détergent (72) et le troisième orifice de distribution de détergent (73) sont chacun pourvus d'un couvercle de porte (14) qui peut être ouvert et fermé.

10. Machine à laver selon la revendication 9, dans laquelle : le deuxième orifice de distribution de détergent (72) et le troisième orifice de distribution de détergent (73) sont disposés sur les deux côtés du premier orifice de distribution de détergent (71) respectivement ; il y a deux récipients (5) ; les deux récipients (5) sont en communication respectivement avec le deuxième orifice de distribution de détergent (72) et le troisième orifice de distribution de détergent (73) respectivement ; et les récipients (5) et la chambre (4) sont répartis dans l'espace de logement.

11. Machine à laver selon la revendication 10, dans laquelle : l'un des deux récipients (5) est formé par deux sous-récipients qui sont en communication l'un avec l'autre.
